# EUROPEAN PATENT APPLICATION

(11) **EP 4 451 778 A1**
(43) Date of publication of application: **23.10.2024**
(21) Application number: 22914350.8
(22) Date of filing: 19.12.2022
(51) Int. Cl.: H04W 72/12

(54) **PARAMETER CONFIGURATION METHOD, COMMUNICATION DEVICE, AND STORAGE MEDIUM**

(30) Priority: 31.12.2021 CN 202111673802
(71) Applicant: ZTE Corporation, Shenzhen, Guangdong 518057 (CN)
(72) Inventor: SHA, Xiubin, Shenzhen, Guangdong 518057 (CN); DAI, Bo, Shenzhen, Guangdong 518057 (CN); LU, Ting, Shenzhen, Guangdong 518057 (CN); TAN, Jie, Shenzhen, Guangdong 518057 (CN)
(74) Representative: Vossius & Partner Patentanwälte Rechtsanwälte mbB
(86) International application number: PCT/CN2022/139923
(87) International publication number: WO 2023/125096

(57) **Abstract**

The present application provides a parameter configuration method, a communication device, and a storage medium. The parameter configuration method is applied to a first communication node and includes: receiving a frame format of a packet data unit, PDU, session sent by a second communication node, where the frame format of the PDU session includes at least one of the following indication information: application packet identification information, application data unit, ADU, identification information, a quality of service, QoS, sub-flow identifier, and a QoS sub-flow priority; and determining scheduling priorities or resource allocation weights of different IP packets in a same QoS flow according to the frame format of the PDU session.

## Description

### FIELD

The present application relates to the field of communication, and relates to, for example, a parameter configuration method, a communication device, and a storage medium.

### BACKGROUND

In the new radio (NR) network, quality of service (QoS) parameters of traffic are configured to a base station by a core network through control plane signaling in accordance with a mapping from a packet data unit session (PDU session) to a quality of service flow (QoS flow) level. One QoS flow has only one QoS priority, and there is no correlation between packets of different QoS flows. However, in services such as extended reality (XR), different PDUs have different priorities and have dependency relations.

### SUMMARY

Embodiments of the present application provide a parameter configuration method. The method is applied to a first communication node, and includes: receiving a frame format of a packet data unit (PDU) session sent by a second communication node, where the frame format of the PDU session includes at least one of the following indication information: application packet identification information, application data unit (ADU) identification information, a quality of service (QoS) sub-flow identifier, and a QoS sub-flow priority.

Embodiments of the present application provide a parameter configuration method. The method is applied to a third communication node, and includes: receiving configuration information sent by a first communication node; where the configuration information includes QoS sub-flow identifiers or QoS sub-flow priorities; and the configuration information includes at least one of the following: service data adaptation protocol (SDAP) configuration information, radio bearer configuration information, logical channel configuration information, and radio link control configuration information.

Embodiments of the present application provide a parameter configuration method. The method is applied to a second communication node, and includes: sending a frame format of a PDU session to a first communication node, where the frame format of the PDU session includes at least one of the following indication information: application packet identification information, ADU identification information, a QoS sub-flow identifier, and a QoS sub-flow priority.

Embodiments of the present application provide a communication device. The communication device includes a communication module, a memory, and one or more processors; where the communication module is configured to communicate with other communication nodes; the memory is configured to store one or more programs; and when the one or more programs are executed by the one or more processors, the one or more processors implement the method according to any one of the above embodiments.

Embodiments of the present application provide a storage medium, storing a computer program. The computer program, when executed by a processor, implements the method according to any one of the above embodiments.

### BRIEF DESCRIPTION OF THE DRAWINGS

FIG. 1 is a diagram of a configuration relation between an application data unit, an application packet, and an Internet protocol (IP) packet according to one embodiment;
FIG. 2 is a schematic of a configuration for a frame format of a PDU session according to one embodiment;
FIG. 3 is a flowchart of a parameter configuration method according to embodiments of the present application;
FIG. 4 is a flowchart of another parameter configuration method according to embodiments of the present application;
FIG. 5 is a flowchart of yet another parameter configuration method according to embodiments of the present application;
FIG. 6 is a schematic of another configuration for a frame format of a PDU session according to embodiments of the present application;
FIG. 7 is a schematic of a configuration for adding QoS sub-flows in a QoS flow according to embodiments of the present application;
FIG. 8 is a schematic of another configuration for adding QoS sub-flows in a QoS flow according to embodiments of the present application;
FIG. 9 is a schematic of another configuration for a frame format of a PDU session according to embodiments of the present application;
FIG. 10 is a schematic of a configuration for PDUs corresponding to a same ADU based on a start mark according to embodiments of the present application;
FIG. 11 is a schematic of a configuration for PDUs corresponding to a same ADU based on an end mark according to embodiments of the present application;
FIG. 12 is a schematic of another configuration for a frame format of a PDU session according to embodiments of the present application;
FIG. 13 is a schematic of another configuration for a frame format of a PDU session according to embodiments of the present application;
FIG. 14 is a schematic of another configuration for a frame format of a PDU session according to embodiments of the present application;
FIG. 15 is a schematic of another configuration for a frame format of a PDU session according to embodiments of the present application;
FIG. 16 is a schematic of another configuration for a frame format of a PDU session according to embodiments of the present application;
FIG. 17 is a schematic of an indication of a number of lost packets tolerable for decoding an application data unit according to embodiments of the present application;
FIG. 18 is a schematic of another indication of a number of lost packets tolerable for decoding an application data unit according to embodiments of the present application;
FIG. 19 is a diagram of a configuration relation between a logical channel group (LCG) identifier and a QoS sub-flow identifier according to embodiments of the present application;
FIG. 20 is a structural schematic of a medium access control control element (MAC CE) of a short buffer status report (short BSR) according to embodiments of the present application;
FIG. 21 is a structural schematic of an MAC CE of a long buffer status report (long BSR) according to embodiments of the present application;
FIG. 22 is a structural block diagram of a parameter configuration apparatus according to embodiments of the present application;
FIG. 23 is a structural block diagram of another parameter configuration apparatus according to embodiments of the present application;
FIG. 24 is a structural block diagram of another parameter configuration apparatus according to embodiments of the present application; and
FIG. 25 is a structural schematic of a communication device according to embodiments of the present application.

### DETAILED DESCRIPTION OF EMBODIMENTS

Embodiments of the present application will be described with reference to the accompanying drawings hereinafter. The present application will be described below in conjunction with accompanying drawings, and the instances set forth are merely used for explaining the present application and are not intended to limit the scope of the present application.

How to identify a correlation between an Internet protocol (IP) packet and an application packet, a correlation between application packets, and different priorities of application packets mapped to a same QoS flow is an urgent issue to be solved.

In the NR network, QoS parameters of traffic are configured to a base station by a core network through control plane signaling in accordance with a mapping from a PDU session to a QoS flow level. One user equipment (UE) can establish up to 256 PDU sessions. One PDU session can include up to 64 QoS flows. The QoS parameters are configured per QoS flow. The QoS parameters include: user priority information (allocation and retention priority (ARP)), guaranteed bit rate (GBR) QoS flow information, and 5th generation mobile communication technology quality of service identifier (5QI) description information (a 5QI index corresponding to a service type, a service priority, a packet delay budget (PDB), etc.).

For a downlink service, a PDU of each user plane is transmitted on a corresponding PDU channel (general packet radio service tunneling protocol-user tunnel (GTP-U tunnel)), and a quality of service flow identifier (QFI) mark is carried in a PDU extension header (that is, a new radio radio access network container (NR RAN Container) or a PDU session container), such that the PDU is associated with the QoS parameters, and PDU scheduling priority discrimination at the QoS flow level is achieved.

For an uplink service, a PDU of a user plane is associated with a QoS flow. The base station may map different QoS flows to different data radio bearers (DRBs), and different DRBs correspond to different LCGs. The UE carries a logical channel group identifier (LCG ID) in a BSR request. The base station allocates uplink scheduling resources based on BSR information, so as to implement PDU scheduling priority differentiation at the QoS flow level.

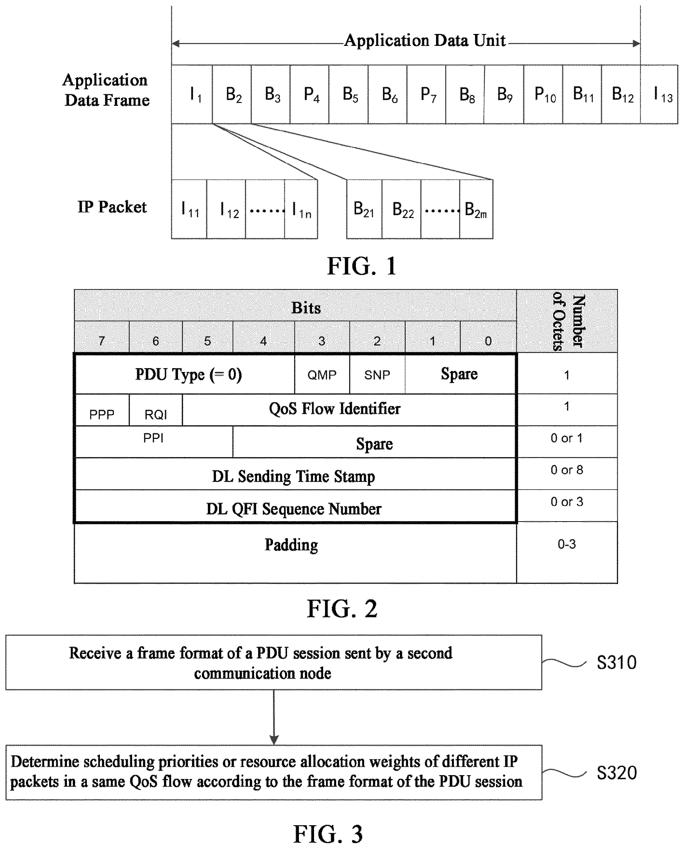

One QoS flow has only one QoS priority, and there is no correlation between packets of different QoS flows. However, in services such as XR, different PDUs may have different priorities, but there are dependency relationships between the PDUs. For example, a video sequence has a plurality of I-frames, P-frames, and B-frames, where decoding of the P-frames and the B-frames depends on the I-frames; and each frame is composed of a plurality of IP packets (PDUs). FIG. 1 is a diagram of a configuration relation between an application data unit, an application packet, and an IP packet according to one embodiment. As shown in FIG. 1, an application data unit (video coding unit) is composed of 12 video frames (that is, application packets/application data frames). The 12 video frames include I₁B₂B₃P₄B₅B₆P₇B₈B₉P₁₀B₁₁B₁₂ (appearance of an I-frame (I₁₃) indicates a start of a new application data unit). Each video frame is composed of a plurality of IP packets (i.e., IP packets or PDUs) (the frame I₁ is composed of *n* IP packets I₁₁I₁₂...I₁ₙ; and B₂ is composed of *m* IP packets B₂₁B₂₂...B₂ₘ). The IP packet may also be a user datagram protocol (UDP) packet or an Ethernet packet.

FIG. 2 is a schematic of a configuration for a frame format of a PDU session according to one embodiment. In the embodiment, the core network sends, to the base station, the frame format of the PDU session as shown in FIG. 2. The frame format of the PDU session is carried in an extension header of a GTP-U PDU (that is, an NR RAN container or a PDU session container) and transmitted on the GTP-U Tunnel.

According to the frame format of the PDU session, the base station can know a QoS flow identifier and a downlink quality of service flow identifier sequence number (DL QFI sequence number) correspond to the PDU. The base station can know the priority level corresponding to the QoS flow identifier based on signaling of an S1 application protocol (S1AP) interface and signaling of an NG application protocol (NGAP) interface.

However, the base station cannot identify an association between IP packets (i.e., IP packets) and application packets (also referred to as application data frames), an association between application data frames, and different priorities between application data frames mapped to a same QoS Flow. Therefore, how to enhance the frame format of the PDU session is still a challenging issue to be addressed.

In one embodiment, FIG. 3 is a flowchart of a parameter configuration method according to embodiments of the present application. The embodiment may be executed by a first communication node. The first communication node is a base station. As shown in FIG. 3, the embodiment includes: S310-S320.

S310, a frame format of a PDU session sent by a second communication node is received.

The frame format of the PDU session includes at least one of the following indication information: application packet identification information, application data unit (ADU) identification information, a QoS sub-flow identifier, and a QoS sub-flow priority.

In the embodiment, the application packet identification information is used to indicate application packet information corresponding to an IP packet. The application packet identification information may indicate corresponding application packet information for the IP packet from different dimensions. Illustratively, the application packet information may be indicated by means of an application packet type. For example, the application packet type includes: an I frame packet, a B frame packet and a P frame packet. The application packet information may also be indicated by means of importance of an application packet. For example, application packets are divided into primary packets and secondary packets according to the importance.

In the embodiment, the ADU identification information is used to indicate at least two of: an application data unit start mark, an application data unit end mark, an application data unit sequence number, and a total number of IP packets in an application data unit. Furthermore, the ADU identification information is further used to implicitly indicate that the higher the application packet in the ADU is, the higher the priority is.

In the embodiment, the QoS sub-flow identifier refers to an identifier of each QoS sub-flow included in the QoS flow; and the QoS sub-flow priority refers to a priority of each QoS sub-flow included in the QoS flow. In one embodiment, the QoS sub-flow identifier and the QoS sub-flow priority may be represented by a QoS sub-priority, that is, the QoS sub-priority includes both the QoS sub-flow identifier and the QoS sub-flow priority.

S320, scheduling priorities or resource allocation weights of different IP packets in a same QoS flow are determined according to the frame format of the PDU session.

In the embodiment, the second communication node sends, to the first communication node, the frame format of the PDU session through user plane, and the frame format of the PDU session includes at least one of the application packet identification information, the ADU identification information, the QoS sub-flow identifier, and the QoS sub-flow priority. As such, the first communication node identifies the association between the IP packet and the application packet, the association between different application packets, and different priorities of application packets mapped to the same QoS flow according to the frame format of the PDU session. Therefore, the first communication node can determine scheduling priorities or resource allocation weights of different IP packets in the same QoS flow according to the frame format of the PDU session, and then a BSR can be reported according to the scheduling priorities and allocated scheduling resources.

In one embodiment, the parameter configuration method which is applied to the first communication node further includes: receiving QoS sub-flow configuration information sent by the second communication node, where the QoS sub-flow configuration information includes the QoS sub-flow priorities and/or the QoS sub-flow identifiers.

In the embodiment, before the first communication node receives the frame format of the PDU session sent by the second communication node, the first communication node receives the QoS sub-flow configuration information sent by the second communication node through control plane signaling. The QoS sub-flow configuration information carries the QoS sub-priority, or alternatively, the QoS sub-flow priority and the QoS sub-flow identifier. In the embodiment, when the QoS sub-flow configuration information only carries the QoS sub-priority, the QoS sub-priority may represent the QoS sub-flow priority and may also represent the QoS sub-flow identifier.

In one embodiment, QoS flow configuration information or the QoS sub-flow configuration information includes one of the following: a maximal total number of lost packets tolerable in an application data unit, a maximal total number of consecutive lost packets tolerable in an application data unit, a maximal total number of lost packets tolerable within a predefined time period, a maximal total number of consecutive lost packets tolerable within a predefined time period, a maximal total number of lost application data units tolerable within a predefined time period, and a maximal total number of consecutive lost application data units tolerable within a predefined time period. A total number of lost packets is a total number of lost IP packets or a total number of lost application packets. In the embodiment, the second communication node sends the QoS flow configuration information or the QoS sub-flow configuration information to the first communication node through control plane signaling. In one embodiment, when the second communication node sends the QoS flow configuration information to the first communication node through control plane signaling, the QoS flow configuration information carries a maximal total number of lost packets tolerable in an application data unit, or a maximal total number of consecutive lost packets tolerable in an application data unit, a maximal total number of lost packets tolerable within a predefined time period, a maximal total number of consecutive lost packets tolerable within a predefined time period, a maximal total number of lost application data units tolerable within a predefined time period, and a maximal total number of consecutive lost application data units tolerable within a predefined time period. A total number of lost packets is a total number of lost IP packets or a total number of lost application packets. In one embodiment, when the second communication node sends QoS sub-flow configuration information to the first communication node through control plane signaling, the QoS sub-flow configuration information carries a maximal total number of lost packets tolerable in an application data unit, or a maximal total number of consecutive lost packets tolerable in an application data unit, a maximal total number of lost packets tolerable within a predefined time period, a maximal total number of consecutive lost packets tolerable within a predefined time period, a maximal total number of lost application data units tolerable within a predefined time period, and a maximal total number of consecutive lost application data units tolerable within a predefined time period. A total number of lost packets is a total number of lost IP packets or a total number of lost application packets.

In one embodiment, application packets with different priorities are mapped to a same QoS flow. The frame format of the PDU session at least includes the ADU identification information. In the embodiment, when the application packets with different priorities are mapped to the same QoS flow, the ADU identification information may be carried in the frame format of the PDU session, to indicate a start mark and an end mark of an application data unit corresponding to each application packet, and further to determine the priority of each application packet in the application data unit. The ADU identification information implicitly indicates that the higher the application packet in each ADU is, the higher the priority is. In one embodiment, a mark bit of the ADU identification information may be one bit or two bits.

In one embodiment, at least two levels of application data units are indicated by using the ADU identification information. In the embodiment, parameters carried in the ADU identification information may be combined, multiplexed, and multi-level included, to indicate a plurality of levels of application data units. Illustratively, assuming that the ADU identification information indicates two levels of application data units, the first level of application data unit may be a video stream, and the second level of application data unit may be a video frame.

In one embodiment, the ADU identification information at least includes one of the following: an application data unit start mark, and an application data unit end mark. In the embodiment, the application data unit start mark is used to indicate a location of the first application packet in the same application data unit. The application data unit end mark is used to indicate a location of the last application packet in the same application data unit.

In one embodiment, the ADU identification information at least includes one of the following: an application data unit sequence number, and an application data unit end mark. In the embodiment, the application data unit sequence number is used to indicate whether IP packets correspond to a same application data unit. IP packets with a same sequence number in a same QoS flow correspond to a same application data unit, and IP packets with different sequence numbers correspond to different application data units.

In one embodiment, the ADU identification information at least includes one of the following: an application data unit start mark, and a packet total number in one application data unit. In the embodiment, the successive IP packets, from an IP packet indicated by the application data unit start mark and with the packet total number in one application data units, belong to the same application data unit.

In one embodiment, application packets with different QoS priorities are mapped to different QoS flows. The frame format of the PDU session includes one of the following: an associated QoS flow identifier (QFI) and an associated downlink QFI sequence number.

The associated QoS flow identifier (QFI) and the associated downlink QFI sequence number are used to represent that there is an association, a dependency relation, a supplementary relation, a primary and secondary relation, a subordinate relation, or a timing relation between a PDU session frame and the associated QoS flow identifier (QFI) and the associated downlink QFI sequence number.

In one embodiment, the frame format of the PDU session includes one of the following: a maximal total number of lost packets tolerable in an application data unit, and a maximal total number of consecutive lost packets tolerable in an application data unit. The number of lost packets is a total number of lost IP packets or a total number of lost application packets. In the embodiment, the second communication node may send the frame format of the PDU session to the first communication node through the user plane, and the frame format of the PDU session carries the maximal total number of lost packets tolerable in an application data unit or a maximal total number of consecutive lost packets tolerable in an application data unit. The number of lost packets is a total number of lost IP packets or a total number of lost application packets.

In one embodiment, the frame format of the PDU session further includes an application data unit start mark, and a packet total number in one application data unit. In the embodiment, the packet total number in one application data unit refers to the total number of IP packets in one application data unit, that is, a number of IP packets, which may also be referred to as a PDU number.

In one embodiment, the application packet identification information may also include at least two of: an application packet sequence number, an application packet start mark, an application packet end mark, and a packet total number in an application packet. Interpretation of each parameter in the application packet identification information is the same as that of a corresponding parameter in the ADU identification information, except that the application data unit is replaced with an application packet.

In one embodiment, application packets with different priorities are mapped to a same QoS flow. Different sub-flow identifiers or sub-priorities in a same QoS flow are mapped to different dedicated data radio bearer (DRB) identifiers, different logical channel (LC) identifiers, or different logical channel group (LCG) identifiers. In the embodiment, the first communication node maps different sub-flow identifiers or sub-priorities in the same QoS flow to different LC identifiers, and then maps the different LC identifiers to different LCG identifiers, such that QoS sub-flows of different priorities or sub-priorities in the same QoS flow can be mapped to the different LCG identifiers. In the embodiment, when the application packets with different priorities are mapped to the same QoS flow, the first communication node may map different sub-flow identifiers or sub-priorities in the same QoS flow to different DRB identifiers, different LC identifiers, or different LCG identifiers, such that the third communication node reports a BSR according to different sub-flow identifiers or sub-priorities.

In one embodiment, the different sub-flow identifiers or sub- priorities in the same QoS flow are mapped to the different DRB identifiers, the different LC identifiers, or the different LCG identifiers as follows: the QoS sub-flow identifiers or the QoS sub-flow priorities are included in at least one of the following configuration information sent to the third communication node: service data adaptation protocol (SDAP) configuration information, radio bearer configuration information, logical channel configuration information, and radio link control configuration information.

The QoS sub-flow identifiers or the QoS sub-flow priorities are used to map IP packets of the same QoS flow to different logical channels.

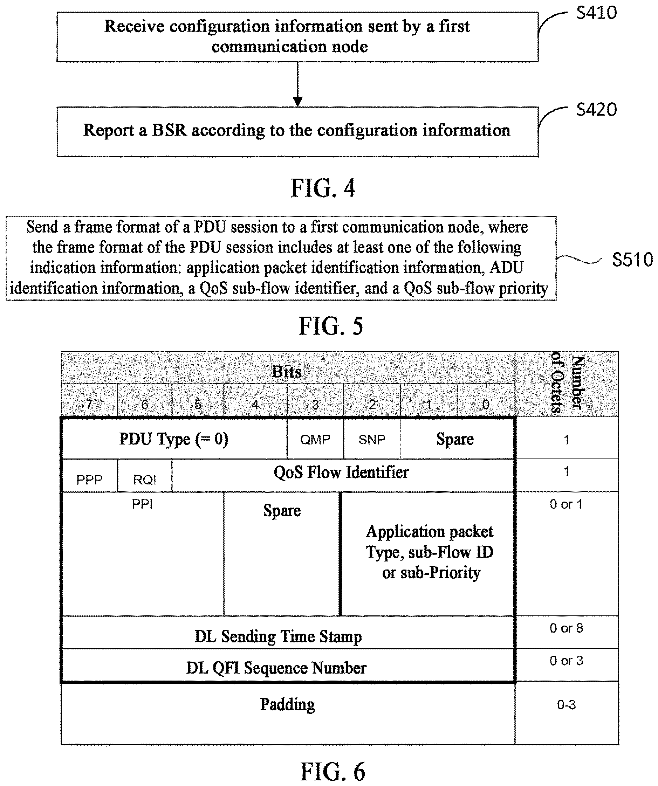

In one embodiment, FIG. 4 is a flowchart of another parameter configuration method according to embodiments of the present application. The embodiment may be executed by a third communication node. The third communication node is a user equipment. As shown in FIG. 4, the embodiment includes: S410-S420.

S410, configuration information sent by a first communication node is received.

S420, a buffer status report (BSR) is reported according to the configuration information.

The configuration information includes QoS sub-flow identifiers or QoS sub-flow priorities. The configuration information includes at least one of the following: SDAP configuration information, radio bearer configuration information, logical channel configuration information, or radio link control configuration information.

In one embodiment, the QoS sub-flow identifiers or the QoS sub-flow priorities are used to map IP packets of the same QoS flow to different logical channels. In the embodiment, the first communication node maps different sub-flow identifiers or sub-priorities in the same QoS flow to different LC identifiers, and then maps the different LC identifiers to different LCG identifiers, such that QoS sub-flows of different priorities or sub-priorities in the same QoS flow can be mapped to the different LCG identifiers. When the third communication node makes a BSR request based on the LCG identifier, the first communication node may distinguish BSRs for the QoS sub-flows of different priorities or the sub-priorities in the same QoS flow.

It should be noted that for explanation of each parameter in the parameter configuration method applied to the third communication node, reference may be made to the description of the corresponding parameter in the parameter configuration method applied to the first communication node in the above embodiments, which will not be repeated herein.

In one embodiment, FIG. 5 is a flowchart of yet another parameter configuration method according to embodiments of the present application. The embodiment may be executed by a second communication node. The second communication node is a core network. As shown in FIG. 5, the embodiment includes S510.

S510, a frame format of a PDU session is transmitted to a first communication node, where the frame format of the PDU session includes at least one of the following indication information: application packet identification information, ADU identification information, a QoS sub-flow identifier, or a QoS sub-flow priority.

In one embodiment, the parameter configuration method which is applied to the second communication node further includes: transmitting QoS sub-flow configuration information to the first communication node, where the QoS sub-flow configuration information includes the QoS sub-flow priorities and/or the QoS sub-flow identifiers.

In one embodiment, QoS flow configuration information or the QoS sub-flow configuration information includes one of the following: a maximal total number of lost packets tolerable in an application data unit, a maximal total number of consecutive lost packets tolerable in an application data unit, a maximal total number of lost packets tolerable within a predefined time period, a maximal total number of consecutive lost packets tolerable within a predefined time period, a maximal total number of lost application data units tolerable within a predefined time period, and a maximal total number of consecutive lost application data units tolerable within a predefined time period. The total number of lost packets is a total number of lost IP packets or a total number of lost application packets.

In one embodiment, application packets with different priorities are mapped to a same QoS flow. The frame format of the PDU session at least includes one of the following: the ADU identification information.

In one embodiment, at least two levels of application data units are indicated by using the ADU identification information.

In one embodiment, the ADU identification information at least includes one of the following: an application data unit start mark, or an application data unit end mark.

In one embodiment, the ADU identification information at least includes one of the following: an application data unit sequence number, or an application data unit end mark.

In one embodiment, the ADU identification information at least includes one of the following: an application data unit start mark, or a packet total number in one application data unit.

In one embodiment, application data frames of different QoS priorities are mapped to different QoS flows. The frame format of the PDU session includes one of the following: an associated QoS flow identifier (QFI) and an associated downlink QFI sequence number.

The associated QoS flow identifier (QFI) and the associated downlink QFI sequence number are used to indicate that there is an association, a dependency relation, a supplementary relation, a primary and secondary relation, a subordinate relation, or a timing relation between a PDU session frame and the associated QoS flow identifier (QFI) and the associated downlink QFI sequence number.

In one embodiment, the frame format of the PDU session includes one of the following: a maximal total number of lost packets tolerable in an application data unit, or a maximal total number of consecutive lost packets tolerable in an application data unit. The number of lost packets is a total number of lost IP packets or a total number of lost application packets.

In one embodiment, the frame format of the PDU session further includes an application data unit start mark, and a packet total number in one application data unit.

In one embodiment, application packets with different priorities are mapped to a same QoS flow. Different sub-flow identifiers or sub-priorities in a same QoS flow are mapped to different dedicated data radio bearer (DRB) identifiers, different logical channel (LC) identifiers, or different logical channel group (LCG) identifiers.

In one embodiment, the different sub-flow identifiers or sub-priorities in the same QoS flow are mapped to the different dedicated data radio bearer (DRB) identifiers, the different logical channel (LC) identifiers, or the different logical channel group (LCG) identifiers as follows: the QoS sub-flow identifiers or the QoS sub-flow priorities are included in at least one of the following configuration information sent to the third communication node: service data adaptation protocol (SDAP) configuration information, radio bearer configuration information, logical channel configuration information, and radio link control configuration information.

The QoS sub-flow identifiers or the QoS sub-flow priorities are used to map IP packets of the same QoS flow to different logical channels.

It should be noted that for explanation of each parameter in the parameter configuration method applied to the second communication node, reference may be made to the description of the corresponding parameter in the parameter configuration method applied to the first communication node in the above embodiment, which will not be repeated herein.

In one embodiment, application packets with different priorities are mapped to a same QoS Flow, and application packet identification information or a priority indication is introduced into the frame format of the PDU session. The application data identification information is an application packet type. With the first communication node being a base station as an example, FIG. 6 is a schematic of another configuration for a frame format of a PDU session according to embodiments of the present application. As shown in FIG. 6, the frame format of the PDU session carries at least one of the following: an application packet type, an application packet sub-priority, or an application packet sub-flow ID. The application packet type or the application packet priority is used by the base station to identify the importance of the PDUs (that is, IP packets or IP Packets in the above embodiment) in a transmission process, so as to identify scheduling priorities or resource allocation weights of different PDUs under the same QoS flow.

Based on the application packet type, the base station may determine the application packet type corresponding to the PDU, so as to determine a scheduling priority, a reliability requirement level, or a resource allocation weight of the PDU. The application packet type may indicate an application packet type corresponding to the IP packet, for example, indicating an I frame packet, a B frame packet, and a P frame packet in a video stream; or indicating whether the packet is a primary packet or a secondary packet, which is used by the base station to identify an importance of the packet.

Based on the application packet sub-priority or application packet sub-flow information, the base station may determine the priority of the application packet corresponding to the PDU, so as to determine a scheduling priority, a reliability requirement, or a resource allocation weight of the PDU.

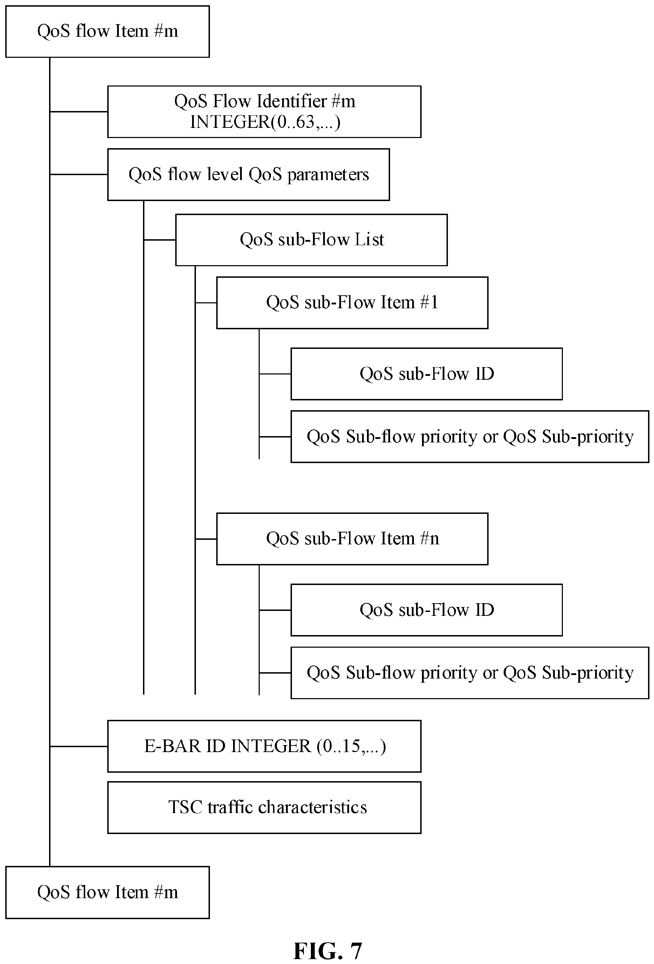

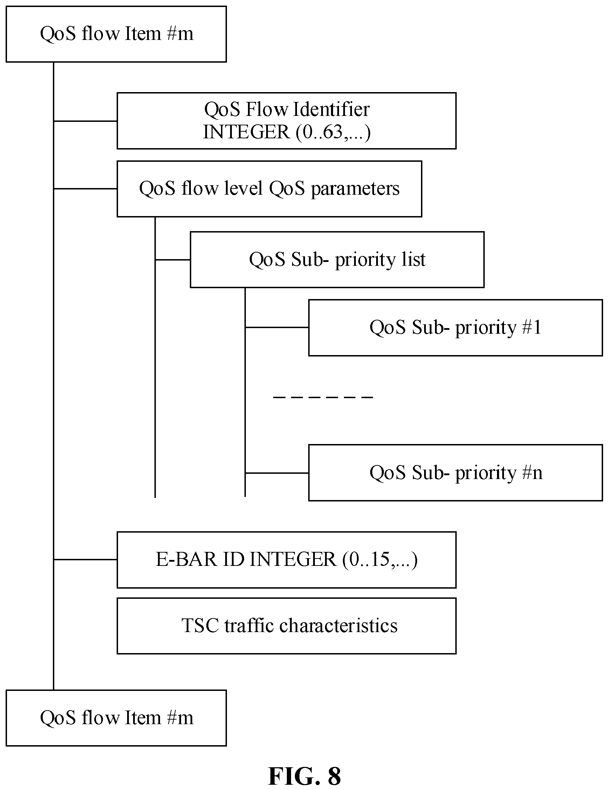

The application packet sub-priority and/or application packet sub-flow ID included in a QoS flow in S1AP/NGAP signaling from the core network to the base station is used by the base station to configure resources of different priorities for packets of different sub-priorities under the same QoS flow. FIG. 7 is a schematic of a configuration for adding QoS sub-flows in a QoS flow according to embodiments of the present application. FIG. 8 is a schematic of another configuration for adding QoS sub-flows in a QoS flow according to embodiments of the present application. As shown in FIG. 7, each QoS flow includes a plurality of QoS sub-flows. Each QoS sub-flow includes: a QoS sub-flow ID and a QoS sub-flow priority; alternatively, each QoS sub-flow includes a QoS sub-priority. The QoS sub-flow may not be reflected in the QoS flow, and only a plurality of QoS sub-priorities may be reflected in the QoS flow, as shown in FIG. 8, the frame format of the PDU session only includes the QoS sub-priority (as shown in FIG. 6). In a case that the QoS sub-flows are reflected in the QoS flow, the PDU format also includes the QoS sub-flow ID and the QoS sub-flow priority; alternatively, the PDU format includes the QoS sub-priority.

QoS parameters related to the QoS sub-flow may be defined based on the QoS parameter difference of the QoS flow, for example, the QoS parameters related to the QoS sub-flow only include parameters with different values from the QoS parameters of the QoS flow.

As for the QoS priority, the base station maps logical channel priorities based on the QoS flow priority and the QoS sub-flow priorities. For example, a QoS absolute priority = the QoS flow priority + the QoS sub-flow priority.

In one embodiment, application packets with different priorities are mapped to the same QoS flow, ADU identification information is introduced into the frame format of the PDU session, and the ADU identification information is used to implicitly indicate that the higher the packet in the ADU is, the higher the priority is.

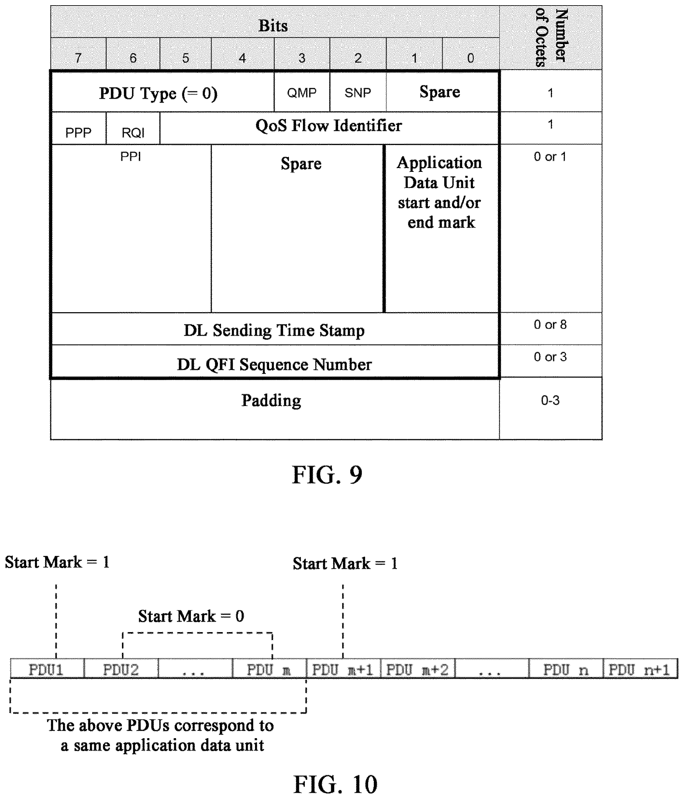

FIG. 9 is a schematic of another configuration for a frame format of a PDU session according to embodiments of the present application. The frame format of the PDU session carries at least one of the following: an application data unit start mark, or an application data unit end mark. A mark bit of the ADU identification information may occupy 2 bits. Four values of the mark bit respectively represent at least one of the following: the mark bit does not exist, transmission of one application data unit starts, transmission of one application data unit ends, or one application data unit only has one PDU. For example, when the 2 bits are '00', it indicates that the mark bit does not exist (does not indicate the start or end of one application data unit), and the start or end of the application data unit cannot be determined, or one application data unit corresponds to one PDU by default.

When the 2 bits are '01', it indicates that the transmission of one application data unit starts. When the 2 bits are '10', it indicates that the transmission of one application data unit ends. When the 2 bits are ` 11', it indicates that one application data unit has only one PDU.

In the embodiment, from DL QFI sequence number 1 of a bit where an application data unit start mark is located to DL QFI sequence number 2 of a bit where an application data unit end mark is located, all PDUs with DL QFI sequence numbers in an interval [DL QFI sequence number 1, DL QFI sequence number 2] under the same QoS flow correspond to a same application data unit. The ADU identification information may imply that for data frames or PDUs in a same application data unit, the higher the sequence number is, the more important the data frame or the PDU is (the higher the scheduling priority is, the higher the reliability requirement is).

In one embodiment, a mark bit of the ADU identification information may occupy 1 bit. When the bit is 1, it indicates an application data unit start mark or end mark under the same QoS flow (where the new start mark is the old end mark).

In one embodiment, FIG. 10 is a schematic of a configuration for PDUs corresponding to a same ADU based on a start mark according to embodiments of the present application. In an embodiment, the value of the 1 bit is 1, indicating an application data unit start mark. All PDUs correspond to one application data unit until the value of the 1 bit is 1 again under the same QoS flow.

As shown in FIG. 10, start mark =1 occurs in PDU1, and start mark =1 occurs in PDU m+1 later, then PDU1, PDU2, ..., and PDU m correspond to a same application data unit.

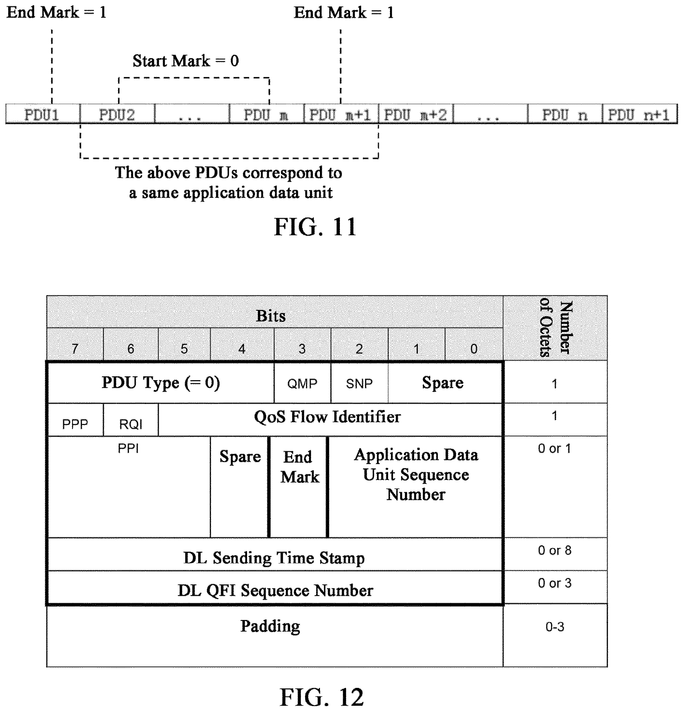

In one embodiment, FIG. 11 is a schematic of a configuration for PDUs corresponding to a same ADU based on an end mark according to embodiments of the present application. In an embodiment, the value of the 1 bit is 1, indicating an application data unit end mark. A PDU corresponding to the end mark and previous consecutive PDUs with end mark = 0 under the same QoS flow correspond to one application data unit.

As shown in FIG. 11, end mark =1 occurs in PDU m+1, this PDU and previous consecutive PDUs (PDU2, ..., PDU m, PDU m+1) with end mark = 0 corresponds to one application data unit.

In one embodiment, FIG. 12 is a schematic of another configuration for a frame format of a PDU session according to embodiments of the present application. As shown in FIG. 12, the frame format of the PDU session carries at least one of the following: an application data unit sequence number, and an application data unit end mark. The application data unit sequence number is used by the base station to identify whether the PDUs correspond to the same application data unit. PDUs with the same application data unit sequence number correspond to the same application data unit under the same QoS flow, and PDUs with different application data unit sequence numbers correspond to different application data units. The application data unit end mark is used to indicate the last PDU corresponding to the same application data unit.

Based on the application data unit sequence number, the base station may determine whether a transmission of a PDU of a new application data unit starts and whether different PDUs correspond to the same application data unit. Based on the application data unit end mark, the base station may determine whether a transmission of PDUs of an application data unit ends. For example, when the end mark in FIG. 12 takes a value of 1, it indicates that the transmission of PDUs of an application data unit ends.

From beginning of transmission of a PDU of a new application data unit to the end of transmission of a PDU of the application data unit, PDUs with the same application data unit sequence number under the same QoS flow correspond to a complete application data unit.

In one embodiment, whether an application data unit corresponding to a current PDU ends may also be identified by determining whether the application data unit sequence number of the current PDU is the same as a sequence number of a next PDU. In a case that transmission of a new application data unit starts, it implies that transmission of a previous application data unit ends. No application data unit end mark is required.

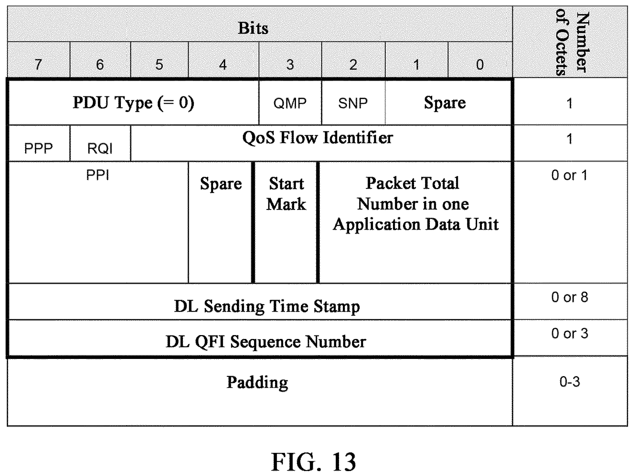

In one embodiment, FIG. 13 is a schematic of another configuration for a frame format of a PDU session according to embodiments of the present application. As shown in FIG. 13, the frame format of the PDU session carries at least one of the following: an application data unit start mark, or a packet total number in one application data unit. Consecutive packets with the packet total number in one application data unit, from a packet containing the application data unit start mark, belong to the same application data unit.

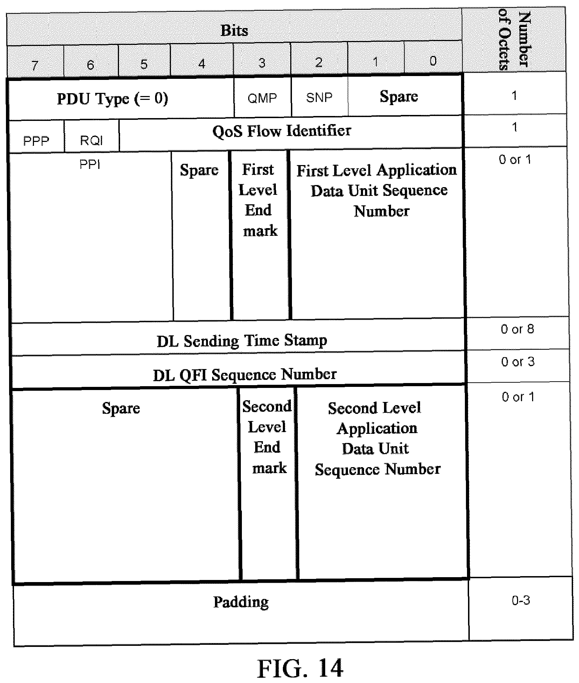

In one embodiment, FIG. 14 is a schematic of another configuration for a frame format of a PDU session according to embodiments of the present application. In the embodiment, FIGS. 9, 12, and 13 may be combined, multiplexed, and multi-level contained, to represent a plurality of levels of application data units. For example, a first level application data unit is a video stream (that is, an application data unit), and a second level application data unit is a video frame (that is, an application data frame/application packet). The configuration method in FIG. 12 is used for two-level inclusion, and a result is shown in FIG. 14 (where bit positions of the First Level and the Second Level are only instances, and an actual number of occupied bits and occupied bit positions may be different, for example, parameters related to the First Level and the Second Level are both placed in extended bit positions of the PDU, or a new PDU format is introduced).

As shown in FIG. 14, the two levels of application data units are illustrated as follows: the first level application data unit represents a video stream, and the second level application data unit represents a video frame. Corresponding to information in FIG. 1, it can be filled in as follows:
First IP packet:
First level End mark: 0
First level Application Data Unit Sequence Number: 1
Second level End mark: 0
Second level Application Data Unit Sequence Number: 1 (Start from frame I1)
Second IP packet:
First level End mark: 0
First level Application Data Unit Sequence Number: 1
Second level End mark: 0
Second level Application Data Unit Sequence Number: 1
...
nth IP packet:
First level End mark: 0
First level Application Data Unit Sequence Number: 1
Second level End mark: 1 (End by frame I1)
Second level Application Data Unit Sequence Number: 1
(n+1)th IP packet:
First level End mark: 0
First level Application Data Unit Sequence Number: 1
Second level End mark: 0
Second level Application Data Unit Sequence Number: 2 (Start from frame B2)
(n+2)th IP packet:
First level End mark: 0
First level Application Data Unit Sequence Number: 1
Second level End mark: 0
Second level Application Data Unit Sequence Number: 2
...
(n+m)th IP packet:
First level End mark: 0
First level Application Data Unit Sequence Number: 1
Second level End mark: 1 (End by frame B2)
Second level Application Data Unit Sequence Number: 2
(n+m+1)th IP packet:
First level End mark: 0
First level Application Data Unit Sequence Number: 1
Second level End mark: 0
Second level Application Data Unit Sequence Number: 3 (End by frame B3)

In one embodiment, application packet frames of different QoS flows are mapped to different QoS flows, and a dependency relation between QoS flows and PDU sequence numbers is introduced into a frame format of a PDU session.

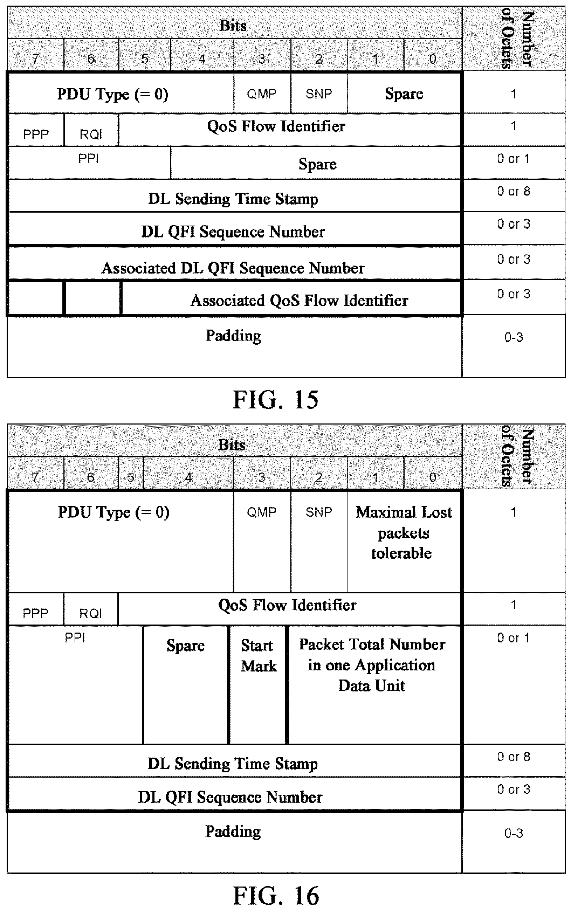

FIG. 15 is a schematic of another configuration for a frame format of a PDU session according to embodiments of the present application. As shown in FIG. 15, the associated QoS flow identifier (QFI) and the associated DL QFI sequence number are used to represent that there is an association, a dependency relation, a supplementary relation, a primary and secondary relation, a subordinate relation, or a timing relation between decoding of the PDU or the application data unit corresponding to the PDU wiht the PDU corresponding to the QoS flow associated QoS flow identifier and the associated DL QFI sequence number or the application data unit corresponding to the PDU; and/or are used to represent that the PDU and the associated PDU belong to the same application message, belong to the same application data unit, or belong to the same type of packets.

For example, only when the PDU corresponding to the QoS flow associated QoS flow identifier and the associated DL QFI sequence number or the application data unit corresponding to the PDU is decoded, the PDU or the application data unit corresponding to the PDU can be decoded.

In one embodiment, FIG. 16 is a schematic of another configuration for a frame format of a PDU session according to embodiments of the present application. The frame format of the PDU session carries a number of lost packets tolerable for decoding an application data unit. The number of lost packets tolerable for decoding the application data unit includes the maximal total number of lost packets or the maximal total number of consecutive lost packets tolerable for decoding the application data unit. The total number of lost packets is a total number of lost IP packets or a total number of lost application packets. As shown in FIG. 16, the frame format of the PDU session carries one of the following: a maximal total number of lost packets tolerable in an application data unit, and a maximal total number of consecutive lost packets tolerable in an application data unit. The frame format of the PDU session may further include an application data unit start mark, and a packet total number in one application data unit. The number of lost packets is a total number of lost IP packets or a total number of lost application packets.

In the embodiment, the number of lost packets tolerable for decoding an application data unit may be indicated by a number of lost packets tolerable that included in the QoS flow of the S 1AP/NGAP signaling from the core network to the base station, or may be indicated by a number of lost packets tolerable that included in the PDU format.

In the embodiment, the maximal lost packets tolerable in FIG. 16 may indicate a total number of the lost packets tolerable or the consecutive lost packets tolerable in the ADU. In a case that the number of lost packets is greater than the maximal lost packets tolerable, application requirements are not satisfied (for example, causing application decoding failure). In a case that lost packets in the packet total number in one application data unit is approaching the maximum lost packets tolerable starting with a packet identified by StartMark, reliability of subsequent packet transmission is improved (such as activating packet data convergence protocol (PDCP) duplication or increasing transmit power). In a case that lost packets in the packet total number in one application data unit is approaching the maximum lost packets tolerable starting with a packet identified by Start Mark, untransmitted packets in the packet total number in one application data unit packet are discarded.

The maximal lost packets tolerable may be defined based on an application data unit (for example, the first level application data unit in FIG. 14) or a packet type (for example, the second level application data unit in FIG. 14).

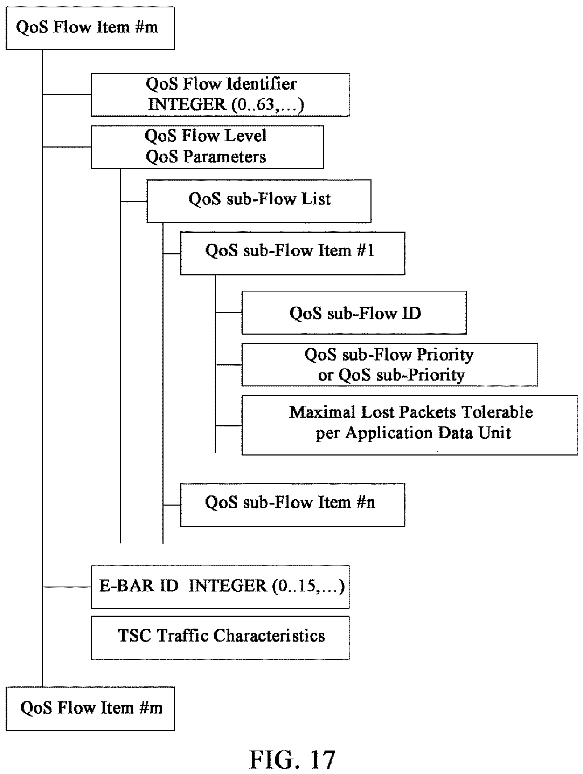

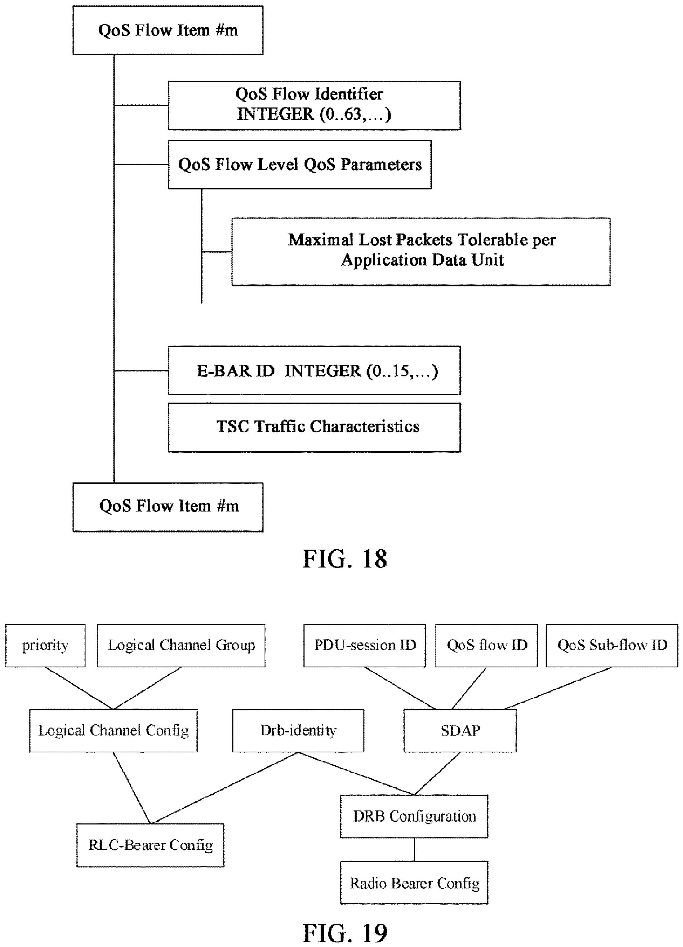

In one embodiment, FIG. 17 is a schematic of an indication of a number of lost packets tolerable for decoding an application data unit according to embodiments of the present application. FIG. 18 is a schematic of another indication of a number of lost packets tolerable for decoding an application data unit according to embodiments of the present application. The number of lost packets tolerable for decoding an application data unit is included in a QoS flow of S1AP or NGAP signaling from the core network to the base station. As shown in FIG. 17, a QoS sub-flow includes a maximal total number of lost packets tolerable in each application data unit or a maximal total number of consecutive lost packets tolerable in each application data unit. As shown in FIG. 18, the QoS flow includes a maximal total number of lost packets tolerable in each application data unit or a maximal total number of consecutive lost packets tolerable in each application data unit.

In one embodiment, the application packet identification information may also include at least two of an application packet sequence number, an application packet start mark, an application packet end mark, and a total number of IP packets included in an application packet. It should be noted that in the above embodiment, interpretation of each parameter in the application packet identification information is the same as description of a corresponding parameter in the ADU identification information, except that the application data unit is replaced with an application packet. Moreover, drawings for the ADU identification information in the above embodiment are also applicable to the application packet identification information, which are not repeated herein.

In one embodiment, FIG. 19 is a diagram of a configuration relation between an LCG identifier and a QoS sub-flow identifier according to embodiments of the present application. In the embodiment, the first communication node is taken as the base station, and the third communication node is taken as a UE, for example, distinguishing of BSR priorities is described when data frames of different priorities are mapped to the same QoS flow. As shown in FIG. 19, the base station maps QoS sub-flow IDs of different priorities or sub-priorities in the same QoS flow to different LC IDs, and then maps the different LC IDs to different LCG IDs, such that QoS sub-flow IDs of different priorities or sub-priorities in the same QoS flow can be mapped to different LCG IDs.

During QoS mapping, SDAP mapping considers that a QoS sub-flow ID, an SDAP and a radio link control-bearer config (RLC-bearer config) are associated with a DRB simultaneously, such that the QoS sub-flow ID is also mapped to the RLC-bearer config; and each RLC-bearer config is associated with an LCG.

When the UE performs a BSR request based on the LCG ID, the BSR may be distinguished for QoS sub-flow IDs of different priorities or sub-priorities in the same QoS flow.

In one embodiment, the BSR request not only reflects the priority of the QoS flow, but also reflects the priority of the QoS sub-flow.

In one embodiment, the QoS sub-flow IDs of different priorities or sub-priorities may also be the application packet type shown in FIG. 6, and the BSR may further reflect the application packet type.

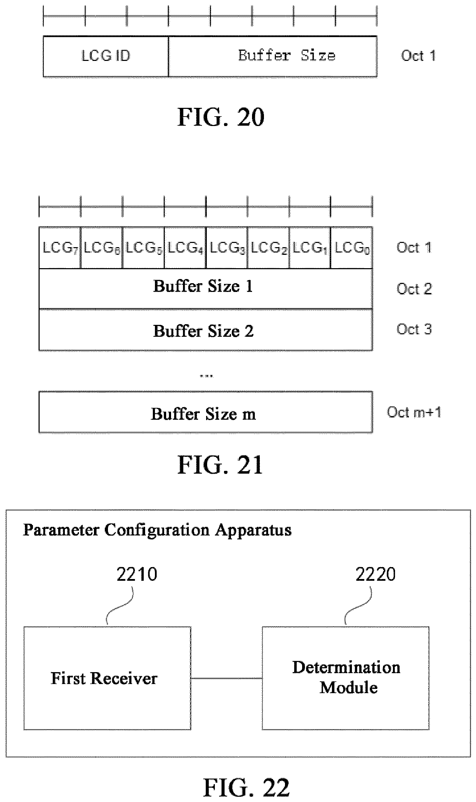

In one embodiment, FIG. 20 is a structural schematic of an MAC CE of a short BSR according to embodiments of the present application. As shown in FIG. 20, one short BSR includes an LCG identifier and a buffer size.

In one embodiment, FIG. 21 is a structural schematic of an MAC CE of a long BSR according to embodiments of the present application. As shown in FIG. 21, one short BSR includes a plurality of LCG identifiers and a buffer size corresponding to each LCG identifier.

In one embodiment, FIG. 22 is a structural block diagram of a parameter configuration apparatus according to embodiments of the present application. The embodiment is applied to a first communication node. As shown in FIG. 22, the parameter configuration apparatus in the embodiment includes a first receiver 2210 and a determination module 2220.

The first receiver 2210 is configured to receive a frame format of a packet data unit (PDU) session sent by a second communication node, where the frame format of the PDU session includes at least one of the following indication information: application packet identification information, application data unit (ADU) identification information, a quality of service (QoS) sub-flow identifier, and a QoS sub-flow priority. The determination module 2220 is configured to determine scheduling priorities or resource allocation weights of different IP packets in a same QoS flow according to the frame format of the PDU session.

In one embodiment, the parameter configuration apparatus which is applied to the first communication node further includes: a second receiver, configured to receive QoS sub-flow configuration information sent by the second communication node, where the QoS sub-flow configuration information includes the QoS sub-flow priorities and/or the QoS sub-flow identifiers.

In one embodiment, QoS flow configuration information or the QoS sub-flow configuration information includes one of the following: a maximal total number of lost packets tolerable in an application data unit, a maximal total number of consecutive lost packets tolerable in an application data unit, a maximal total number of lost packets tolerable within a predefined time period, a maximal total number of consecutive lost packets tolerable within a predefined time period, a maximal total number of lost application data units tolerable within a predefined time period, and a maximal total number of consecutive lost application data units tolerable within a predefined time period.

In one embodiment, application packets with different priorities are mapped to a same QoS flow. The frame format of the PDU session at least includes the ADU identification information.

In one embodiment, at least two levels of application data units are indicated by using the ADU identification information.

In one embodiment, the ADU identification information at least includes one of the following: an application data unit start mark, or an application data unit end mark.

In one embodiment, the ADU identification information at least includes one of the following: an application data unit sequence number, or an application data unit end mark.

In one embodiment, the ADU identification information at least includes one of the following: an application data unit start mark, or a packet total number in one application data unit.

In one embodiment, application packets with different QoS priorities are mapped to different QoS flows. The frame format of the PDU session includes one of the following: an associated QoS flow identifier (QFI) and an associated downlink QFI sequence number.

The associated QoS flow identifier (QFI) and the associated downlink QFI sequence number are used to indicate that there is an association, a dependency relation, a supplementary relation, a primary and secondary relation, a subordinate relation or a timing relation between a PDU session frame and the associated QoS flow identifier (QFI) and the associated downlink QFI sequence number.

In one embodiment, the frame format of the PDU session includes one of the following: a maximal total number of lost packets tolerable in an application data unit, or a maximal total number of consecutive lost packets tolerable in an application data unit.

In one embodiment, the frame format of the PDU session further includes an application data unit start mark, and a packet total number in one application data unit.

In one embodiment, application packets with different priorities are mapped to a same QoS flow. Different sub-flow identifiers or sub-priorities in a same QoS flow are mapped to different dedicated data radio bearer (DRB) identifiers, different logical channel (LC) identifiers, or different logical channel group (LCG) identifiers.

In one embodiment, the different sub-flow identifiers or sub-priorities in the same QoS flow are mapped to the different dedicated DRB identifiers, the different LC identifiers, or the different LCG identifiers as follows: the QoS sub-flow identifiers or the QoS sub-flow priorities are included in at least one of the following configuration information sent to the third communication node: service data adaptation protocol (SDAP) configuration information, radio bearer configuration information, logical channel configuration information, or radio link control configuration information. The QoS sub-flow identifiers or the QoS sub-flow priorities are used to map IP packets of the same QoS flow to different logical channels.

The parameter configuration apparatus provided in the embodiment is configured to implement the parameter configuration method in the embodiment as shown in FIG. 3. The parameter configuration apparatus provided in the embodiment has similar implementation principles and technical effects, which are not repeated herein.

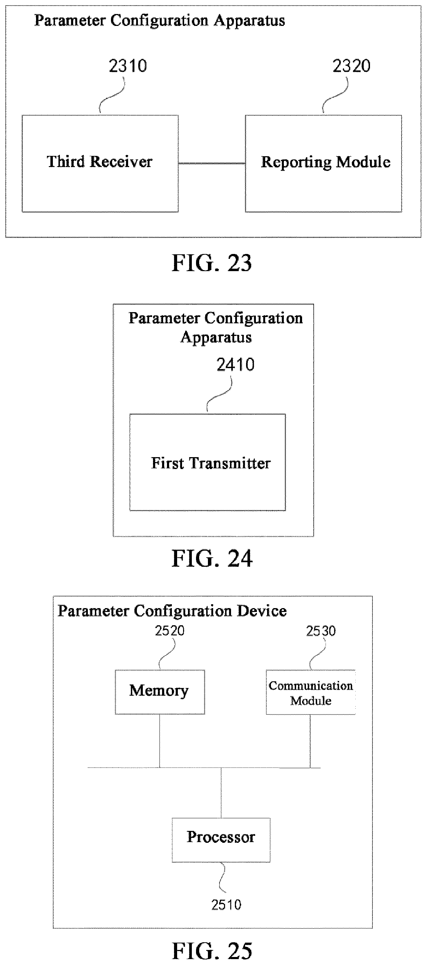

In one embodiment, FIG. 23 is a structural block diagram of another parameter configuration apparatus according to embodiments of the present application. The embodiment may be executed by a third communication node. The third communication node is a user equipment. As shown in FIG. 23, the parameter configuration apparatus in the embodiment includes a third receiver 2310 and a reporting module 2320.

The third receiver 2310 is configured to receive configuration information sent by a first communication node. The reporting module 2320 is configured to report a buffer status report (BSR) according to the configuration information. The configuration information includes QoS sub-flow identifiers or QoS sub-flow priorities. The configuration information includes at least one of the following: SDAP configuration information, radio bearer configuration information, logical channel configuration information, and radio link control configuration information.

In one embodiment, the QoS sub-flow identifiers or the QoS sub-flow priorities are used to map IP packets of the same QoS flow to different logical channels.

The parameter configuration apparatus provided in the embodiment is configured to implement the parameter configuration method in the embodiment applied to the third communication node as shown in FIG. 4. The parameter configuration apparatus provided in the embodiment has similar implementation principles and technical effects, which are not repeated herein.

In one embodiment, FIG. 24 is a structural block diagram of another parameter configuration apparatus according to embodiments of the present application. The embodiment may be executed by a second communication node. The second communication node is a core network. As shown in FIG. 24, the embodiment includes a first transmitter 2410.

The first transmitter 2410 is configured to send a frame format of a PDU session to a first communication node, where the frame format of the PDU session includes at least one of the following indication information: application packet identification information, ADU identification information, a QoS sub-flow identifier, and a QoS sub-flow priority.

In one embodiment, the parameter configuration apparatus which is applied to the second communication node further includes: a second transmitter, configured to send QoS sub-flow configuration information to the first communication node, where the QoS sub-flow configuration information includes the QoS sub-flow priorities and/or the QoS sub-flow identifiers.

In one embodiment, QoS flow configuration information or the QoS sub-flow configuration information includes one of the following: a maximal total number of lost packets tolerable in an application data unit, a maximal total number of consecutive lost packets tolerable in an application data unit, a maximal total number of lost packets tolerable within a predefined time period, a maximal total number of consecutive lost packets tolerable within a predefined time period, a maximal total number of lost application data units tolerable within a predefined time period, and a maximal total number of consecutive lost application data units tolerable within a predefined time period.

In one embodiment, application packets with different priorities are mapped to a same QoS flow. The frame format of the PDU session at least includes the ADU identification information.

In one embodiment, at least two levels of application data units are indicated by using the ADU identification information.

In one embodiment, the ADU identification information at least includes one of the following: an application data unit start mark, or an application data unit end mark.

In one embodiment, the ADU identification information at least includes one of the following: an application data unit sequence number, or an application data unit end mark.

In one embodiment, the ADU identification information at least includes one of the following: an application data unit start mark, or a packet total number in one application data unit.

In one embodiment, application data frames of different QoS priorities are mapped to different QoS flows. The frame format of the PDU session includes one of the following: an associated QoS flow identifier (QFI) and an associated downlink QFI sequence number.

The associated QoS flow identifier (QFI) and the associated downlink QFI sequence number are used to indicate that there is an association, a dependency relation, a supplementary relation, a primary and secondary relation, a subordinate relation, or a timing relation between a PDU session frame and the associated QoS flow identifier (QFI) and the associated downlink QFI sequence number.

In one embodiment, the frame format of the PDU session includes one of the following: a maximal total number of lost packets tolerable in an application data unit, or a maximal total number of consecutive lost packets tolerable in an application data unit.

In one embodiment, the frame format of the PDU session further includes an application data unit start mark, and a packet total number in one application data unit.

In one embodiment, application packets with different priorities are mapped to a same QoS flow. Different sub-flow identifiers or sub-priorities in a same QoS flow are mapped to different dedicated data radio bearer (DRB) identifiers, different logical channel (LC) identifiers, or different logical channel group (LCG) identifiers.

In one embodiment, the different sub-flow identifiers or sub-priorities in the same QoS flow are mapped to the different dedicated DRB identifiers, the different LC identifiers, or the different LCG identifiers as follows: the QoS sub-flow identifiers or the QoS sub-flow priorities are included in at least one of the following configuration information sent to the third communication node: service data adaptation protocol (SDAP) configuration information, radio bearer configuration information, logical channel configuration information, and radio link control configuration information. The QoS sub-flow identifiers or the QoS sub-flow priorities are used to map IP packets of the same QoS flow to different logical channels.

The parameter configuration apparatus provided in the embodiment is configured to implement the parameter configuration method in the embodiment applied to the second communication node as shown in FIG. 5. The parameter configuration apparatus provided in the embodiment has similar implementation principles and technical effects, which are not repeated herein.

FIG. 25 is a structural schematic of a communication device according to embodiments of the present application. As shown in FIG. 25, the device provided in the present application includes a processor 2510, a memory 2520, and a communication module 2530. One or more processors 2510 may be provided in the device. One processor 2510 is illustrated in FIG. 25. One or more memories 2520 may be provided in the device. One memory 2520 is illustrated in FIG. 25. The processor 2510, the memory 2520, and the communication module 2530 in the device may be connected via a bus or in other manners. In FIG. 25, connection by means of a bus is taken as an example. In the embodiment, the device may be a base station.

As a computer-readable storage medium, the memory 2520 may be configured to store a software program, a computer-executable program, and a module, such as a program instruction/module corresponding to the device of any one of the embodiments in the present application (for example, the first receiver and the determination module in the parameter configuration apparatus). The memory 2520 may include a program storage section and a data storage section. The program storage section may store an operation system and an application program required by at least one function. The data storage section may store data created from the use of the device, etc. Moreover, the memory 2520 may include a high-speed random access memory, and may further include a non-volatile memory, e.g., at least one disk storage device, a flash memory device, or other non-volatile solid-state storage devices. In some examples, the memory 2520 may further include a memory remotely arranged with respect to the processor 2510, the remote memory may be connected to the device by means of a network. Instances of the above network include, but are not limited to, the Internet, an intranet, a local area network, a mobile communication network, and combinations of the Internet, an intranet, a local area network, and a mobile communication network.

The communication module 2530 is configured to communicate with other communication nodes.

When the communication device is a first communication node, the device provided above may be configured to execute the parameter configuration method applied to the first communication node provided in any one of the above embodiments, and has corresponding functions and effects.

When the communication device is a second communication node, the device provided above may be configured to execute the parameter configuration method applied to the second communication node provided in any one of the above embodiments, and has corresponding functions and effects.

When the communication device is a third communication node, the device provided above may be configured to execute the parameter configuration method applied to the third communication node provided in any one of the above embodiments, and has corresponding functions and effects.

Embodiments of the present application further provide a storage medium including a computer-executable instruction. The computer-executable instruction, when executed by a computer processor, executes the parameter configuration method applied to a first communication node. The method includes: receive a frame format of a packet data unit (PDU) session sent by a second communication node, where the frame format of the PDU session includes at least one of the following indication information: application packet identification information, application data unit (ADU) identification information, a quality of service (QoS) sub-flow identifier, and a QoS sub-flow priority; and determine scheduling priorities or resource allocation weights of different IP packets in a same QoS flow according to the frame format of the PDU session.

Embodiments of the present application further provide a storage medium including a computer-executable instruction. The computer-executable instruction, when executed by a computer processor, executes the parameter configuration method applied to a third communication node. The method includes: receive configuration information sent by a first communication node; and report a buffer status report (BSR) according to the configuration information. The configuration information includes QoS sub-flow identifiers or QoS sub-flow priorities. The configuration information includes at least one of the following: SDAP configuration information, radio bearer configuration information, logical channel configuration information, and radio link control configuration information.

Embodiments of the present application further provide a storage medium including a computer-executable instruction. The computer-executable instruction, when executed by a computer processor, executes the parameter configuration method applied to a second communication node. The method includes: send a frame format of a PDU session to a first communication node, where the frame format of the PDU session includes at least one of the following indication information: application packet identification information, ADU identification information, a QoS sub-flow identifier, and a QoS sub-flow priority.

Those skilled in the art would appreciate that the term of user equipment encompasses any type of wireless user equipment, such as a mobile phone, a portable data processing apparatus, a portable web browser, or a vehicle-mounted mobile station.

Generally, the various embodiments of the present application may be implemented in hardware or special purpose circuits, software, logic, or any combination thereof. For example, some aspects may be implemented in hardware, and other aspects may be implemented in firmware or software that may be executed by a controller, a microprocessor, or other computing apparatuses, which are not limited in the present application.

Embodiments of the present application may be implemented by execution of a computer program instruction by a data processor of a mobile apparatus, for example, in a processor entity, by hardware, or by a combination of software and hardware. The computer program instruction may be an assembly instruction, an instruction set architecture (ISA) instruction, a machine instruction, a machine dependent instruction, a microcode, a firmware instruction, state setting data, or a source code or object code written in any combination of one or more programming languages.

Any logic flow block diagram in the drawings of the present application may represent program steps, may represent interconnected logic circuits, modules, and functions, or may represent a combination of program steps and a logic circuit, a module, and a function. The computer program may be stored in a memory. The memory may be of any type suitable for a local technical environment and may be implemented using any suitable data storage technology including, but not limited to, a read-only memory (ROM), a random access memory (RAM), an optical memory device and system (digital video disc (DVD) or compact disk (CD)), etc. The computer-readable medium may include a non-transitory storage medium. The data processor may be of any type suitable for the local technical environment including, but not limited to, a general purpose computer, a special purpose computer, a microprocessor, a digital signal processor (DSP), an application specific integrated circuit (ASIC), a field-programmable gate array (FPGA), and a processor based on a multi-core processor architecture.

## Claims

1. A parameter configuration method, applied to a first communication node, comprising:
receiving a frame format of a packet data unit, PDU, session sent by a second communication node, wherein the frame format of the PDU session comprises at least one of the following indication information: application packet identification information, application data unit, ADU, identification information, a quality of service, QoS, sub-flow identifier, and a QoS sub-flow priority.

2. The method of claim 1, further comprising:
receiving QoS sub-flow configuration information sent by the second communication node, wherein the QoS sub-flow configuration information comprises at least one of the QoS sub-flow priority or the QoS sub-flow identifier.

3. The method of claim 2, wherein QoS flow configuration information or the QoS sub-flow configuration information comprises one of the following: a maximal total number of lost packets tolerable in an application data unit, a maximal total number of consecutive lost packets tolerable in an application data unit, a maximal total number of lost packets tolerable within a predefined time period, a maximal total number of consecutive lost packets tolerable within a predefined time period, a maximal total number of lost application data units tolerable within a predefined time period, and a maximal total number of consecutive lost application data units tolerable within a predefined time period.

4. The method of claim 1, wherein application packets with different priorities are mapped to a same QoS flow, and the frame format of the PDU session at least comprises the ADU identification information.

5. The method of claim 4, wherein at least two levels of application data units are indicated by using the ADU identification information.

6. The method of claim 4, wherein the ADU identification information at least comprises one of the following: an application data unit start mark and an application data unit end mark.

7. The method of claim 4, wherein the ADU identification information at least comprises one of the following: an application data unit sequence number and an application data unit end mark.

8. The method of claim 4, wherein the ADU identification information at least comprises one of the following: an application data unit start mark, and a packet total number in one application data unit.

9. The method of claim 1, wherein application packets with different QoS priorities are mapped to different QoS flows; and the frame format of the PDU session comprises one of the following: an associated QoS flow identifier, QFI, and an associated downlink QFI sequence number.

10. The method of claim 1, wherein the frame format of the PDU session comprises one of the following: a maximal total number of lost packets tolerable in an application data unit and a maximal total number of consecutive lost packets tolerable in an application data unit.

11. The method of claim 10, wherein the frame format of the PDU session further comprises: an application data unit start mark, and a packet total number in one application data unit.

12. The method of claim 1, wherein application packets with different priorities are mapped to a same QoS flow; and different sub-flow identifiers or sub-priorities in a same QoS flow are mapped to different dedicated data radio bearer, DRB, identifiers, different logical channel, LC, identifiers, or different logical channel group, LCG, identifiers.

13. The method of claim 12, wherein mapping the different sub-flow identifiers or sub-priorities in the same QoS flow to the different dedicated DRB identifiers, the different LC identifiers, or the different LCG identifiers comprises: including the QoS sub-flow identifiers or the QoS sub-flow priorities in at least one of the following configuration information sent to a third communication node: service data adaptation protocol, SDAP, configuration information, radio bearer configuration information, logical channel configuration information, and radio link control configuration information,
wherein the QoS sub-flow identifiers or the QoS sub-flow priorities are used to map IP packets of the same QoS flow to different logical channels.

14. A parameter configuration method, applied to a third communication node, comprising:
receiving configuration information sent by a first communication node; and
reporting a buffer status report, BSR, according to the configuration information;
wherein the configuration information comprises QoS sub-flow identifiers or QoS sub-flow priorities; and
the configuration information comprises at least one of the following: SDAP configuration information, radio bearer configuration information, logical channel configuration information, and radio link control configuration information.

15. The method of claim 14, wherein the QoS sub-flow identifiers or the QoS sub-flow priorities are used to map IP packets of a same QoS flow to different logical channels.

16. A parameter configuration method, applied to a second communication node, comprising:
sending, to a first communication node, a frame format of a PDU session, wherein the frame format of the PDU session comprises at least one of the following indication information: application packet identification information, ADU identification information, a QoS sub-flow identifier, and a QoS sub-flow priority.

17. A communication device, comprising a communication module, a memory, and at least one processor; wherein
the communication module is configured to communicate with other communication nodes;
the memory is configured to store at least one program; and
when the at least one program is executed by the at least one or more processors, the at least one processor implements the method according to any of claims 1-13, 14-15 or 16.

18. A storage medium storing a computer program, which, when executed by a processor, implements the method according to any of claims 1-13, 14-15 or 16.
